(19) Europäisches Patentamt
European Patent Office
Office européen des brevets

(11) Publication number: 0 187 034 A2

(12) **EUROPEAN PATENT APPLICATION**

(21) Application number: 85309378.9

(22) Date of filing: 20.12.85

(51) Int. Cl.⁴: C 08 F 110/08, C 08 F 4/64

(30) Priority: 24.12.84 JP 270770/84

(43) Date of publication of application: 09.07.86 Bulletin 86/28

(84) Designated Contracting States: BE DE FR GB IT NL SE

(71) Applicant: TOA NENRYO KOGYO KABUSHIKI KAISHA, 1-1 Hitotsubashi, 1-Chome Chiyoda-Ku, Tokyo 100 (JP)

(72) Inventor: Fujita, Masahito, 1902-5, Ooaza Kamekubo Ooi-machi, Iruma-gun Saitama-ken (JP)
Inventor: Sakuma, Masato, 17-12, Harigaya 2-chome, Urawa-shi Saitama-ken (JP)
Inventor: Tachikawa, Mamoru, 5-13, Nishi 2-chome, Kamifukuoka-shi Saitama-ken (JP)
Inventor: Kizaki, Masami, 371, Ooaza Nakagukuoka, Kamifukuoka-shi Saitama-ken (JP)
Inventor: Miyazaki, Makoto, 4-3, Yanagi-cho, Sakado-shi Saitama-ken (JP)

(74) Representative: Northover, Robert Frank et al, ESSO Chemical Limited Esso Chemical Research Centre P.O. Box 1, Abingdon Oxfordshire, OX13 6BB (GB)

(54) **Process for producing poly-1-butene.**

(57) A process for producing poly-1-butene which comprises polymerizing 1-butene in the presence of a lower hydrocarbon at a temperature in the range of from 20 to 45°C by using a polymerization catalyst composed of:

(A) a solid catalyst component containing as essential constituents a metal oxide, magnesium, halogen, and titanium;

(B) an organic compound of a metal belonging to Groups I to III of the Periodic Table; and

(C) an electron donor compound.

EP 0 187 034 A2

'PROCESS FOR PRODUCING POLY-1-BUTENE'

The present invention relates to a process for producing poly-1-butene and, more particularly, to a process for producing in high yields poly-1-butene having a high bulk density and a high stereoregularity.

Prior art

In the case where slurry polymerization of 1-butene is performed by using a Ziegler-Natta catalyst in a solvent of hydrocarbon, the resulting poly-1-butene is often obtained in the form of jelly due to swelling by the hydrocarbon. This makes the polymerization operation difficult to perform.

In order to overcome this disadvantage, there was proposed in Japanese Patent Laid-open No. 88984/1979 a process for polymerizing 1-butene at a temperature in the range from about 70 to 140°F by using (A) a catalyst formed by mixing and pulverizing a titanium halide, magnesium chloride or manganous chloride, a Lewis base, and an unsaturated aliphatic compound, and (B) a cocatalyst composed of a trihydrocarbyl aluminum compound, a Lewis base, and a dialkylaluminum halide. There was also proposed in Japanese Patent Laid-open No. 123607/1980 a process for performing the preliminary polymerization of 1-butene at a temperature lower than 30°C or performing the preliminary polymerization of alpha-olefin at a temperature lower than 80°C, and then performing the polymerization of 1-butene at a temperature of from 30 to 48°C by using a catalyst composed of (A) a titanium complex containing as essential constituents magnesium, titanium, halogen, and electron donor, and (B) an organic compound of a metal belonging to Groups I to III of the Periodic Table. In these processes, the solid substance to support the titanium constituent is substantially magnesium chloride, and the third component of the catalyst is a carboxylic ester.

These prior arts alleviate the above-mentioned problems to some extent; but the catalytic activity is not high enough to eliminate the step for removing catalyst residues from the polymer. Moreover, the polymers obtained by these processes do not have a practically

high level of stereoregularity and bulk density and do not have satisfactory particle properties.

## Problems to be solved by the invention

It is an object of this invention to provide a process for the slurry polymerization of 1-butene which provides poly-1-butene having a high bulk density and a high stereoregularity in high yields.

## Means to solve the problem

### Summary of the invention

The present inventors carried out a series of researches, which led to the finding that the object of this invention can be achieved when 1-butene is polymerized by using a catalyst composed of a solid component containing as essential constituents a metal oxide, magnesium, halogen, and titanium, an organometallic compound, and an electron donor compound. The present invention was completed based on this finding.

Accordingly, the gist of this invention resides in a process for producing poly-1-butene which comprising polymerizing 1-butene in the presence of a lower hydrocarbon at a temperature in the range from 20 to 45°C by using a polymerization catalyst composed of:

(A) a solid catalyst component containing as essential constituents a metal oxide, magnesium, halogen, and titanium;

(B) an organic compound of a metal belonging to Groups I to III of the Periodic Table; and

(C) an electron donor compound.

## Preparation of solid catalyst component

The solid catalyst component used in this invention contains as essential constituents a metal oxide, magnesium, halogen, and titanium. Usually it is obtained by contacting a metal oxide, a magnesium compound, and a titanium halide compound with one another. Where the titanium compound is not a halogen-containing compound, it is necessary to bring a halogen element or a halogen-containing compound into contact with them. In the preparation of the solid catalyst component, an electron donor may be involved in the contacting. In addition, a compound of silicon or aluminum may be involved in the contacting.

The process for preparing the solid catalyst component is briefly described below with reference to typical examples.

(1) A metal oxide is contacted with a liquid magnesium compound or a

solution of a magnesium compound, and the resulting product is contacted with a titanium compound.

(2) A metal oxide and a magnesium compound or a complex compound of a magnesium compound and an electron donor compound are copulverized and the resulting product is contacted with a titanium compound.

(3) A metal oxide is treated with a halogenating agent and then contacted with a magnesium compound or a complex compound of a magnesium compound and an electron donor, and the resulting product is contacted with a titanium compound.

In these processes, it is preferable to use an electron donor at least once.

To be more specific, the solid catalyst component can be produced by the following known processes.

A metal oxide, a magnesium halide compound, and an electron donor are contacted with one another, and the resulting product is contacted with a titanium halide. (Japanese Patent Laid-open No. 129192/1978)

A metal oxide and magnesium hydrocarbyl halide are contacted with each other, and the resulting product is contacted with a Lewis base and titanium tetrachloride. (Japanese Patent Laid-open No. 94909/1980)

A metal oxide which has been treated with a halogenating agent is contacted with a magnesium halide, the resulting product is contacted with a titanium halide compound, and the resulting product is contacted with an electron donor. (Japanese Patent Laid-open Nos. 127405/1980 and 98206/1981)

A metal oxide is contacted with a magnesium halide which has been treated with an electron donor, and the resulting product is contacted with a liquid titanium halide. (Japanese Patent Laid-open No. 155003/1980)

A magnesium halide, an electron donor, a titanium or boron alkoxide, an aromatic hydrocarbon, and titanium tetrachloride are copulverized, and the resulting product is contacted with a metal oxide in a solution of titanium tetrachloride. (Japanese Patent Laid-open No. 11508/1983)

A metal oxide treated with a chlorinating agent is contacted with a complex of a magnesium halide and an electron donor, and the resulting product is contacted with a solution of a liquid

titanium halide compound. (Japanese Patent Laid-open No. 18609/1981)

A metal oxide is contacted with a magnesium compound represented by $Mg(OR')(OR^2)$ or $Mg(OR)X$ in an organic solvent, and the resulting product is contacted with an electron donor and titanium halide compound. (Japanese Patent Laid-open Nos. 162607/1983 and 162608/1983)

A metal oxide is contacted with a magnesium hydrocarbyl compound or magnesium hydrocarbyl compound and aluminum hydrocarbyl compound, and a halogenating compound, and the resulting product is contacted with a Lewis base and titanium tetrachloride. (Japanese Patent Laid-open No. 115405/1980)

A metal oxide, a hydrocarbon-soluble organic magnesium compound or a reaction product of said magnesium compound and an electron donor, and a chlorosilane compound are contacted with one another, and the resulting product is contacted with a halogen-containing titanium compound. (Japanese Patent Laid-open No. 108107/1982)

In addition to the above-mentioned known processes, the following processes can be used.

A reaction product of a metal oxide, a dihydrocarbyl magnesium, and a halogen-containing alcohol is contacted with an electron donor and a titanium compound.

A contact product of a metal oxide, an alkoxy group-containing magnesium compound, and a silicon compound having the hydrogen-silicon bond or a halogen-containing compound is contacted with an electron donor and a titanium compound.

As compared with the catalyst components obtained by the known processes, those obtained by the processes mentioned just above tend to produce better results.

When the above-mentioned solid catalyst component is produced, a proper solvent may be used. Examples of such a solvent include hydrocarbons (e.g., hexane, heptane, octane, decane, cyclopentane, cyclohexane, benzene, toluene, and xylene) and halogenated hydrocarbons (e.g., carbon tetrachloride, dichloroethane, dichloroethylene, and chlorobenzene. It is also possible to use alcohols, carboxylic esters, aldehydes, and ethers which belong to the electron donor mentioned later.

The metal oxide used for the preparation of the above-mentioned solid catalyst component is an oxide of an element selected from Groups II to IV of the Periodic Table. It includes, for example, $B_2O_3$, MgO, $Al_2O_3$, $SiO_2$, CaO, $TiO_2$, ZnO, $ZrO_2$, $SnO_2$, BaO, and $ThO_2$. Preferable among them are $B_2O_3$, MgO, $Al_2O_3$, $SiO_2$, $TiO_2$, and $ZrO_2$. Particularly preferable is $SiO_2$. A complex oxide containing them can also be used. It includes, for example, $SiO_2$-MgO, $SiO_2$-$Al_2O_3$, $SiO_2$-$TiO_2$, $SiO_2$-$V_2O_5$, $SiO_2$-$Cr_2O_3$, and $SiO_2$-$TiO_2$-MgO.

The magnesium compound used for the preparation of the solid catalyst component includes, for example, dihydrocarbyl magnesium wherein the hydrocarbyl group which can be the same of different is a $C_1$-$C_{20}$ alkyl, cycloalkyl, aryl, or aralkyl group (e.g., dimethyl magnesium, diethyl magnesium, ethylmethyl magnesium, butylethyl magnesium, diisobutyl magnesium, dihexyl magnesium, di-2-ethylhexyl magnesium, and diphenyl magnesium), magnesium dihalide (e.g.,. magnesium chloride, magnesium bromide, magnesium iodide, and magnesium fluoride), a $C_1$-$C_{20}$ alkoxy magnesium halide (e.g., methoxy magnesium chloride and ethoxy magnesium chloride), a $C_1$-$C_{20}$ hydrocarbyl magnesium halide (e.g., ethyl magnesium chloride and butyl magnesium chloride), a $C_1$-$C_{20}$ dialkoxy magnesium (e.g., dimethoxy magnesium, diethoxy magnesium, and dibutoxy magnesium), hydrocarbyl alkoxy magnesium, hydrocarbyl magnesium hydride, magnesium hydride halide, and magnesium carboxylate.

These magnesium compounds may be a mixture or complex with other organometallic compounds. For example, dihydrocarbyl magnesium may be used in the form of a mixture or complex with a hydrocarbyl compound of boron, beryllium, aluminum, or zinc (e.g., triethyl aluminum, triethyl boron, diisobutyl beryllium, and diethyl zinc). These magnesium compounds may be prepared at the time of use by the known process. For example, dialkoxy magnesium may be produced by reacting metallic magnesium or dihydrocarbyl magnesium with an alcohol, ortho acid ester, or alkoxyl group-containing silicon, phosphorus, or boron compound. Alkoxy magnesium halide may be produced by contacting dialkoxy magnesium with a halogenating agent. Hydrocarbyl alkoxy magnesium halide may be produced by contacting a hydrocarbyl magnesium halide with an alcohol, ortho acid ester, or the alkoxy group-containing compound mentioned above.

These magnesium compounds may be used in combination with one another; and they may also be treated with an electron donor compound, halosilane, alkoxysilane, silanol, or aluminum compound.

The titanium compound used for the preparation of the solid catalyst component include, for example, titanium tetrachloride, titanium tetrabromide, trichloroethoxytitanium, trichlorobutoxytitanium, dichlorodiethyoxytitanium, dichlorodibutoxytitanium, dichlorodiphenoxytitanium, chlorotriethoxytitanium, chlorotributoxytitanium, tetrabutoxytitanium, and titanium trichloride. Preferable among them are tetravalent titanium halides such as titanium tetrachloride, trichloroethoxytitanium, dichlorodibutoxytitanium, and dichlorodiphenoxytitanium. Particularly preferable is titanium tetrachloride.

The electron donor used for the preparation of the solid catalyst component includes, for example, alcohols, ketones, aldehydes, carboxylic acids, carboxylic acid anhydrides, carboxylic acid halides, carboxylic esters, inorganic acid esters, ethers, amines, amides, nitriles, isocyanates, alcoholates, compounds in which phosphorus, arsenic, or antimony is connected to an organic group through carbon or oxygen, phosphoamides, thioethers, thioesters, and organic silicon compounds. Preferable among them are alcohols, carboxylic acids, carboxylic acid anhydrides, carboxylic acid halides, carboxylic esters, inorganic acid esters, ethers, amides (e.g., carboxylic acid amides), and organic silicon compounds.

Examples of alcohols include alcohols of carbon number 1 to 25 and halogen substitutes of the alcohols such as methanol, ethanol, propanol, butanol, hexanol, octanol, 2-ethyl-hexanol, cyclohexanol, benzyl alcohol, phenylethyl alcohol, phenol, cresol, ethylphenol.

Examples of the carboxylic acids include carboxylic acids of carbon number 1 to 15 such as formic acid, acetic acid, propionic acid, butyric acid, isobutyric acid, valeric acid, caproic acid, pivalic acid, acrylic acid, methacrylic acid, and crotonic acid, malonic acid, succinic acid, glutaric acid, adipic acid, sebasic acid, maleic acid, fumaric acid, tartaric acid, cyclohexane monocarboxylic acid, cyclohexene monocarboxylic acid, cis-1,2-cyclohexane dicarboxylic acid, cis-4-methylcylohexene-1,2-dicarboxylic acid, benzoic acid, toluic acid, anisic acid, p-tertiary-butylbenzoic acid, naphthoic acid, cinnamic acid, phthalic acid, isophthalic acid, terephthalic acid, and naphthalic acid.

The carboxylic acid anhydrides are those anhydrides of the above-mentioned carboxylic acids.

The carboxylic acid halides include the chlorides, bromides, iodides, and fluorides of the above-mentioned carboxylic acids.

Examples of the carboxylic esters include butyl formate, ethyl acetate, butyl butyrate, isobutyl isobutyrate, propyl pivalate, isobutyl pivalate, ethyl acrylate, methyl methacrylate, ethyl methacrylate, isobutyl methacrylate, diethyl malonate, diisobutyl malonate, diethyl succinate, dibutyl succinate, diisobutyl succinate, diethyl glutarate, dibutyl glutarate, diisobutyl glutarate, diisobutyl adipate, dibutyl sebacate, diisobutyl sebacate, diethyl maleate, dibutyl maleate, diisobutyl maleate, monomethyl fumarate, diethyl fumarate, diisobutyl fumarate, diethyl tartrate, dibutyl tartrate, diisobutyl tartrate, ethyl cyclohexanecarbonate, methyl benzoate, ethyl benzoate, methyl p-toluylate, ethyl p-tertiarybutylbenzoate, ethyl p-anisate, ethyl alpha-naphthoate, isobutyl alpha-naphthoate, ethyl cinnamate, monomethyl phthalate, monobutyl phthalate, dibutyl phthalate, diisobutyl phthalate, dihexyl phthalate, dioctyl phthalate, di-2-ethyl-hexyl phthalate, diaryl phthalate, diphenyl phthalate, diethyl isophthalate, diisobutyl isophthalate, diethyl terephthalate, dibutyl terephthalate, diethyl naphthalate, dibutyl naphthalate, triethyl trimellitate, tributyl trimellitate, tetramethyl pyromellitate, tetraethyl pyromellitate, and tetrabutyl pyromellitate.

Examples of the inorganic acid esters include methyl orthosilicate, ethyl orthosilicate, butyl orthosilicate, isobutyl orthosilicate, hexyl orthosilicate, octyl orthosilicate, and phenyl orthosilicate.

Examples of the ethers include ethers of carbon number 2 to 20 such as diethyl ether, diisopropyl ether, dibutyl ether, diisobutyl ether, diisoamyl ether, di-2-ethylhexyl ether, diaryl ether, ethylaryl ether, butylaryl ether, diphenyl ether, anisole, ethylphenyl ether, and tetrahydrofuran.

Examples of the carboxylic acid amides include the amides of the above-mentioned carboxylic acids.

Preferred organic silicon compounds are those having alkoxy groups. Their examples include methyltrimethoxysilane, methyltriethoxysilane, methyltributoxysilane, methyltriphenoxysilane, ethyl-

triethoxysilane, ethyltriisobutoxysilane, ethyltriphenoxysilane, butyltrimethoxysilane, butyltriethoxysilane, butyltributoxysilane, butyltriphenoxysilane, isobutyltriisobutoxysilane, vinyltriethoxysilane, aryltrimethoxysilane, phenyltrimethoxysilane, phenyltriethoxysilane, benzyltriphenoxysilane, methyltriaryloxysilane, dimethyldimethoxysilane, dimethyldiethoxysilane, dimethyldiisopropoxysilane, dimethyldibutoxysilane, dimethyldihexyloxysilane, dimethyldiphenoxysilane, diethyldiethoxysilane, diethyldiisobutoxysilane, diethyldiphenoxysilane, dibutyldiisopropoxysilane, dibutyldibutoxysilane, dibutyldiphenoxysilane, diisobutyldiethoxysilane, diisobutyldiisobutoxysilane, diphenyldimethoxysilane, diphenyldiethoxysilane, diphenyldibutoxysilane, dibenzyldiethoxysilane, divinyldiphenoxysilane, diaryldipropoxysilane, diphenyldiaryloxysilane, methylphenyldimethoxysilane, and chlorophenyldiethoxysilane.

The halogen that constitutes the solid catalyst component is selected from fluorine, chlorine, bromine, and iodine. Chlorine is preferable.

The halogenating agent used for the preparation of the solid catalyst component includes, for example, halogens such as chlorine, bromine, and iodine; halogen compounds of metallic or non-metallic elements such as $SiCl_4$, $SnCl_4$, $AlCl_3$, $BCl_3$, $SbCl_3$, $BI_3$, $PCl_3$, and $PCl_5$; oxyhalides of non-metallic elements such as $SO_2Cl_2$, $SOCl_2$, NOCl, and $POCl_3$; and halogenated hydrocarbons such as carbon tetrachloride, 1,2-dichloroethane, 1,1,2-trichloroethylene, hexachloroethane, 1,2-dichloropropane, octachloropropane, hexachlorocyclohexane, dichlorobenzene, and hexachlorobenzene.

The silicon compound having a silicon-hydrogen bond which is used for the preparation of the solid catalyst component includes, for example, $HSiCl_3$, $H_2SiCl_2$, $H_3SiCl$, $HCH_3SiCl_2$, $HC_2H_5SiCl_2$, $H(t\text{-}C_4H_9)SiCl_2$, $HC_6H_5SiCl_2$, $H(CH_3)_2SiCl$, $H(i\text{-}C_3H_7)_2SiCl$, $H_2C_2H_5SiCl$, $H_2(n\text{-}C_4H_9)SiCl$, $H_2(C_6H_4CH_3)SiCl$, $HSi(CH_3)_3$, $HSiCH_3(OCH_3)_2$, $HSiCH_3(OC_2H_5)_2$, $HSi(OCH_3)_3$, $(C_2H_5)_2SiH_2$, $HSi(CH_3)_2(OC_2H_5)$, $HSi(CH_3)_2[N(CH_3)_2]$, $HSiCH_3(C_2H_5)_2$, $HSiC_2H_5(OC_2H_5)_2$, $HSiCH_3[N(CH_3)_2]_2$, $C_6H_5SiH_3$, $HSi(C_2H_5)_3$, $HSi(OC_2H_5)_3$, $HSi(CH_3)_2[N(C_2H_5)_2]$, $HSi[N(CH_3)_2]_3$, $C_6H_5CH_2SiH_2$, $C_6H_5(CH_3)_2SiH$, $(n\text{-}C_3H_7)_3SiH$, $HSiCl(C_6H_5)_2$, $H_2Si(C_6H_5)_2$, $HSi(C_6H_5)_2CH_3$, $(n\text{-}C_5H_{11}O)_3SiH$, $HSi(C_6H_5)_3$, $(n\text{-}C_5H_{11})_3SiH$, $(ClCH_2CH_2O)_2CH_3SiH$, $HSi(OCH_2CH_2Cl)_3$, $[H(CH_3)_2Si]_2O$,

$[H(CH_3)_2Si]_2NH$, $(CH_3)_3SiOSi(CH_3)_2H$, $[H(CH_3)_2Si]_2C_6H_4$, $[H(CH_3)_2SiO]_2Si(CH_3)_2$, $[(CH_3)_3SiO]_2SiHCH_3$, $[(CH_3)_3SiO]_3SiH$, and $\{Si(CH_3)(H)O\}_5$.

Preferable among them are halogenated silicon compounds having a hydrogen-silicon bond such as $HSiCl_3$, $H_2SiCl_2$, $H_3SiCl$, $HCH_3SiCl_2$, $HC_2H_5SiCl_2$, $H(t\text{-}C_4H_9)SiCl_2$, $HC_6H_5SiCl_2$, $H(CH_3)_2SiCl$, $H(i\text{-}C_3H_7)_2SiCl$, $H_2C_2H_5SiCl$, $H_2(n\text{-}C_4H_9)SiCl$, $H_2(C_6H_4CH_3)SiCl$, and $HSiCl(C_6H_5)_2$.

The term "halogen-containing alcohol" as used in one of the preferred embodiments of this invention means a monohydric or polyhydric alcohol possessing one or more hydroxyl groups in the molecule thereof and having one or more hydrogen atoms thereof other than the aforementioned hydroxyl group substituted with a halogen atom. Concrete examples of the halogen atom are chlorine, bromine, iodine, and fluorine atom. Among the halogen atoms cited above, the chlorine atom is particularly desirable.

Examples of the halogen-containing alcohol are 2-chloro-ethanol, 1-chloro-2-propanol, 3-chloro-1-propanol, 1-chloro-2-methyl-2-propanol, 4-chloro-1-butanol, 5-chloro-1-pentanol, 6-chloro-1-hexanol, 3-chloro-1,2-propane diol, 2-chlorocyclohexanol, 4-chlorobenzhydrol, (m,o,p)-chlorobenzyl alcohol, 4-chlorocatechol, 4-chloro-(m,o)-cresol, 6-chloro-(m,o)-cresol, 4-chloro-3,5-dimethylphenol, chlorohydroquinone, 2-benzyl-4-chlorophenol, 4-chloro-1-naphthol, (m,o,p)-chlorophenol, p-chloro-alpha-methylbenzyl alcohol, 2-chloro-4-phenylphenol, 6-chlorothinol, 4-chlororesorcin, 2-bromoethanol, 3-bromo-1-propanol, 1-bromo-2-propanol, 1-bromo-2-butanol, 2-bromo-p-cresol, 1-bromo-2-naphthol, 6-bromo-2-naphthol, (m,o,p)-bromo-phenol, 4-bromoresorcin, (m,o,p)-fluorophenol, p-iodophenol: 2,2-dichloroethanol, 2,3-dichloro-1-propanol, 1,3-dichloro-2-propanol, 3-chloro-1-(alpha-chloromethyl)-1-propanol, 2,3-dibromo-1-propanol, 1,3-dibromomono-2-propanol, 2,4-dibromophenol, 2,4-dibromo-1-naphthol: 2,2,2-trichloroethanol, 1,1,1-trichloro-2-propanol, ß,ß,ß-trichloro-tert-butanol, 2,3,4-trichlorphenol, 2,4,5-trichlorophenol, 2,4,6-trichlorophenol, 2,4,6-tribromophenol, 2,3,5-tribromo-2-hydroxy toluene, 2,3,5-tribromo-4-hydroxy toluene, 2,2,2-trifluoroethanol, alpha,alpha,alpha-trifluoro-m-cresol, 2,4,6-triiodophenol: 2,3,4,6-tetrachlorophenol, tetrachlorohydroquinone, tetrachloro-bis-phenol A, tetrabromo-bis-phenol A,

2,2,3,3-tetrafluoro-1-propanol, 2,3,5,6-tetrafluorophenol, and tetrafluororesorcin.

The reaction auxiliary used in the preparation of the solid catalyst may be selected from the organoaluminum compound used as a constituent of the polymerization catalyst mentioned later.

Polymerization catalyst

The polymerization catalyst used in this invention obtained by combining the catalyst component prepared as mentioned above with an organic compound of a metal belonging to Groups I to III of the Periodic Table and an electron donor compound.

The organic compound of a metal belonging to Groups I to III of the Periodic Table includes organic compounds of lithium, magnesium, calcium, zinc, and aluminum. Preferable among them are organoaluminum compounds which are represented by the formula $R_nAlX_{3-n}$ (where R is an alkyl group or aryl group; X is a halogen atom, alkoxy group, or hydrogen atom; and n is a number in the range of $1 \leq n \leq 3$). Preferred examples include $C_1$ to $C_{18}$, more suitably $C_2$ to $C_6$ alkyl aluminum compounds and mixtures thereof and complex compounds thereof such as trialkyl aluminum, dialkyl aluminum monohalide, monoalkyl aluminum dihalide, alkyl aluminum sesquihalide, dialkyl aluminum monoalkoxide, and dialkyl aluminum monohydride. Their examples include trialkyl aluminum such as trimethyl aluminum, triethyl aluminum, tripropyl aluminum, triisobutyl aluminum, and trihexyl aluminum; dialkyl aluminum monohalide such as dimethyl aluminum chloride, diethyl aluminum chloride, diethyl aluminum bromide, diethyl aluminum iodide, and diisobutyl aluminum chloride; monoalkyl aluminum dihalide such as methyl aluminum dichloride, ethyl aluminum dichloride, methyl aluminum dibromide, ethyl aluminum dibromide, ethyl aluminum diiodide, and isobutyl aluminum dichloride; alkyl aluminum sesquihalide such as ethyl aluminum sesquichloride; dialkyl aluminum monoalkoxide such as dimethyl aluminum methoxide, diethyl aluminum ethoxide, diethyl aluminum phenoxide, dipropyl aluminum ethoxide, diisobutyl aluminum ethoxide, and diisobutyl aluminum phenoxide; and dialkyl aluminum hydride such as dimethyl aluminum hydride, diethyl aluminum hydride, dipropyl aluminum hydride, and diisobutyl aluminum hydride.

Preferable among these compounds is trialkyl aluminum, particularly triethyl aluminum and triisobutyl aluminum. The trialkyl

aluminum may be used in combination with other organoaluminum compounds such as commercially available diethyl aluminum chloride, ethyl aluminum dichloride, ethyl aluminum sesquichloride, diethyl aluminum ethoxide, and diethyl aluminum hydride, or a mixture thereof or a complex compound thereof.

It is also possible to use an organoaluminum compound in which two or more aluminum atoms are connected through an oxygen atom or nitrogen atom. Examples of such compounds are

$(C_2H_5)_2AlOAl(C_2H_5)_2$, $(C_4H_9)_2AlOAl(C_4H_9)_2$, and

$(C_2H_5)_2AlNAl(C_2H_5)_2$.

|

$C_2H_5$

The organic compounds of metals other than aluminum include diethyl magnesium, ethyl magnesium chloride, diethyl zinc, $LiAl(C_2H_5)_4$, and $LiAl(C_7H_{15})_4$.

The above-mentioned organometallic compound is used in an amount of 1 to 1000 gram-mol, particularly 10 to 500 gram-mol, for 1 gram-atom of titanium in the solid catalyst component.

The electron donor compound used as a component of the polymerization catalyst may be selected from those which are used in the preparation of the solid catalyst component. Preferable among them are inorganic acid esters, silicon compounds having alkoxyl groups, and electron donor compounds having a hetero atom such as nitrogen atom and oxygen atom which is mentioned later. Preferable ones are inorganic acid esters and silicon compounds having alkoxyl groups.

Examples of the electron donor compound containing a hetero atom include piperidine compounds such as 2,2,6,6-tetramethylpiperidine, 2,6-diisopropylpiperidine, 2,6-diisobutylpiperidine, 2,6-diisobutyl-4-methylpiperidine, 2,2,6-trimethylpiperidine, 2,2,6,6-tetraethylpiperidine, 1,2,2,6,6-penta-methylpiperidine, 2,2,6,6-tetramethyl-4-piperidylbenozate, and bis-(2,2,6,6-tetramethyl-4-pyperidyl)sebacate; pyridine compounds such as 2,6-diisopropylpyridine, 2,6-diisobutylpyridine, and 2-isopropyl-6-methylpyridine; pyrrolidine compounds such as 2,2,5,5-tetramethylpyrrolidine, 2,5-diisopropylpyrrolidine, 2,2,5-trimethylpyrrolidine, 1,2,2,5,5-pentamethylpyrrolidine, and 2,5-diisobutylpyrrolidine; amine compounds such as diisopropylethylamine, t-butyldimethylamine, diphenylamine, and di-o-tolylamine; aniline compounds such as N,N-diethylaniline and N,N-diisopropyl-

aniline; ketone compounds such as o-tolyl-t-butyl ketone, methyl-2,6-di-t-butylphenyl ketone, and di-o-tolyl ketone, furan compounds such as 2,2,5,5-tetraethyltetrahydrofuran and 2,2,5,5-tetramethyltetrahydrofuran; and pyran compounds such as 2,2,6,6-tetraethyltetrahydropyran and 2,2,6,6-tetramethyltetrahydropyran.

The electron donor compound is used in such an amount that the amount of the metal in the organometallic compound is 0.1 to 100 gram-atom, preferably 1 to 50 gram-atom, for 1 gram-mol of the electron donor compound.

These electron donor compounds may be used in combination with one another. Good results are produced particularly in the case where the above-mentioned inorganic acid ester or silicon compound having alkoxyl groups is used in combination with other electron donor compounds.

Process for polymerization of butene-1

The polymerization of butene-1 is accomplished by the slurry polymerization process in the presence of a lower hydrocarbon such as n-butane, i-butane, n-pentane, i-pentane, and cyclopentane. It is also possible to use 1-butene as a lower hydrocarbon.

The polymerization is performed at 20 to 45°C, preferably at 30 to 40°C. If the polymerization temperature is higher than 45°C, the resulting polymer partly swells and the bulk density sharply decreases. If it is lower than 20°C, the rate of polymerization is low and the catalyst does not fully exhibit its activity, with the result that it is impossible to eliminate the deashing step from the polymerization process.

The molecular weight of the resulting polymer is controlled by using hydrogen or any known molecular weight modifier. The polymerization may be performed batchwise, continuously or in any other method, or in one stage or two or more stages. The main polymerization may be preceded by the preliminary polymerization at 20°C or below.

The scope of this invention covers not only the homopolymerization of butene-1 but also copolymerization of butene-1 with a small amount of other olefins such as ethylene, propylene, 1-hexene, and 4-methyl-1-pentene.

Effect of the invention

The process of this invention makes it possible to produce in high yields poly-1-butene having a high bulk density and a high stereoregularity. Thus the resulting polymer does not need the removal of atactic poly-1-butene and catalyst residues.

The process of this invention permits stable continuous operation over a long period of time with a minimum of fouling in the reactor. The formation of lumpy or ribbonlike polymer resulting from fouling is suppressed. This leads to the effective production of uniform poly-1-butene.

Examples

The invention is now illustrated with the following examples, in which percent (%) and ppm are by weight.

The diethyl ether insolubles (abbreviated as II hereinafter) which indicate the ratio of the crystalline phase in the polymer are the amount of the polymer which remain undissolved when the polymer is extracted with boiling diethyl ether for 5 hours in a Soxhlet apparatus of improved type. Melt flow rate (MFR) was measured according to ASTM D1238 (at 190°C under a load of 2.16 kg). The bulk density was measured according to ASTM D1895-69, Method A.

Example 1

Preparation of solid catalyst component

In a 200 ml flask equipped with a dropping funnel and stirrer, with the atmosphere therein replaced with nitrogen, were placed 5 g of silicon dioxide ($SiO_2$) [prepared by calcining G-952, a product of Davison Co., having a specific surface area of 302 $m^2$/g, a pore volume of 1.54 $cm^3$/g, and an average pore radius of 204 A, in a nitrogen stream at 200°C for 2 hours and further at 700°C for 5 hours] and 20 ml of n-heptane. Then 20 ml of 20% solution of n-butylethyl magnesium (BEM) in n-heptane (MAGALA BEM, a product of Texas Alkyls Co., containing 26.8 mmol of BEM) was added, followed by stirring at 90°C for 2 hours. The supernatant liquid was discarded by decantation and the resulting solids were washed with 50 ml of n-hexane at room temperature. The supernatant liquid was discarded again by decantation and the solids were washed four times with n-heptane.

To the solids thus obtained was added 20 ml of n-heptane to make a slurry. A solution containing 9.6 g (64 mmol) of 2,2,2-trichloroethanol in 10 ml of n-heptane was added dropwise from the dropping funnel at 0°C over 30 minutes. The reactants were stirred at 0°C for 1 hour, and the temperature of the reactants was raised to 80°C. Stirring was continued at this temperature for 1 hour. After the reaction was complete, the solids were washed twice with 50 ml of n-heptane and three times with 50 ml of toluene at room temperature. Analysis showed that the solids (solid component I) contained 49.5% of $SiO_2$, 3.8% of magnesium (Mg), and 35.5% of chlorine (Cl), and had a specific surface area of 255 $m^2/g$ and a pore volume of 0.79 $cm^3/g$.

To the solid component I obtained in the step mentioned above were added 20 ml of toluene and 0.6 of di-n-butyl phthalate, followed by reaction at 50°C for 2 hours. Then 30 ml of titanium tetrachloride were added, followed by reaction at 90°C for 2 hours. The supernatant liquid was discarded by decantation and the remaining solids were washed with 50 ml of toluene at 90°C for 15 minutes. The washing with toluene was performed again. 20 ml of toluene and 30 ml of titanium tetrachloride were added, followed by reaction at 90°C for 2 hours. The resulting solid substance was washed eight times with 50 ml of n-hexane at room temperature. The solid substance was dried in vacuo at room temperature for 1 hour. Thus there was obtained 7.4 g of catalyst component, which had a specific surface area of 279 $m^2/g$ and a pore volume of 0.90 $cm^3/g$ and contained 56.5% of $SiO_2$, 4.4% of Mg, 15.1% of Cl, and 2.4% of Ti.

Polymerization of 1-butene

In a 1.5-liter stainless steel autoclave equipped with a stirrer were placed under a nitrogen stream a mixture composed of 60.1 mg of catalyst component prepared in the step mentioned above, 1.51 ml of solution containing 1 mol of triisobutyl aluminum (called TIBAL hereinafter) in 1 liter of n-heptane, 0.75 ml of solution containing 0.1 mol of phenyltriethoxysilane (called PES hereinafter) in 1 liter of n-heptane, which mixture had been allowed to stand for 5 minutes prior to use. Then 0.1 liters of hydrogen gas as a molecular weight modifier, 400 ml of isobutane as a solvent, and 400 ml of 1-butene (liquid) were forced into the autoclave. The polymerization of 1-butene was performed at 37°C for 4 hours. After the completion of polymerization, unreacted monomer and solvent were purged, and there was obtained 141.8 g of granular poly-1-butene.

The amount (g) of the polymer formed per g of the catalyst component was 2,360. (This is referred to as Kc hereinafter.) The polymer had an MFR of 0.29 g/10 min, a bulk density of 0.40 $g/cm^3$, and an II of 99.0%. The ash in the polymer contained 10 ppm of Ti, 19 ppm of Mg, 64 ppm of Cl, and 239 ppm of $SiO_2$.

Examples 2 to 9

The polymerization of 1-butene was performed in the same manner as in Example 1 except that TIBAL (as an organometallic compound) and PES (an electron donor compound) were replaced by other compounds or the polymerization conditions were changed as shown in Table 1. The results are shown in Table 1.

Example 10

Copolymerization of 1-butene with propylene

In a 1.5-liter stainless steel autoclave equipped with a stirrer were placed under a nitrogen stream a mixture composed of 62.4 mg of catalyst component prepared in Example 1, 1.56 ml of solution containing 1 mol of TIBAL in 1 liter of n-heptane, 0.78 ml of solution containing 0.1 mol of PES in 1 liter of n-heptane, which mixture had been allowed to stand for 5 minutes prior to use. Then 0.1 liters of hydrogen gas as a molecular weight modifier, 400 ml of isobutane as a solvent, and 400 ml of 1-butene (liquid) were forced into the autoclave. A total of 10 g of propylene was forced into the autoclave intermittently 12 times at intervals of 20 minutes. The random copolymerization of 1-butene with propylene was performed at 30°C for 4 hours. There was obtained 93.0 g of granular random copolymer of 1-butene and propylene. The physical properties and other items of the resulting copolymer are shown in Table 1. The content of propylene in the copolymer was 3.6% according to $^{13}C$-NMR.

Example 11

The polymerization of 1-butene was performed in the same manner as in Example 1 except that the polymerization temperature was changed to 25°C. The results are shown in Table 1.

Example 12

Preparation of solid catalyst component

To the solid component I obtained in the preparation of the solid catalyst component in Example 1 were added 20 ml of toluene and 0.6 g of di-n-butyl phthalate, followed by reaction at 50°C for 2 hours. The supernatant liquid was discarded by decantation and the remaining

solids were washed twice with 50 ml of toluene at 90°C. Then 20 ml of toluene and 30 ml of titanium tetrachloride were added, followed by reaction at 90°C for 2 hours. The resulting solid substance was washed eight times with 50 ml of n-hexane at room temperature. The solid substance was dried in vacuo at room temperature for 1 hour. Thus there was obtained 7.5 g of catalyst component, which contained 55.9% of $SiO_2$, 4.3% of Mg, 16.3% of Cl, and 3.1% of Ti.

Polymerization of 1-butene

The polymerization of 1-butene was performed using the solid catalyst component obtained in the step mentioned above in the same manner as in Example 1 except that triethylaluminum (TEAL) was used as the organometallic compound. The results are shown in Table 2.

Example 13

The polymerization of 1-butene was performed in the same manner as in Example 12 except that PES was replaced by phenyltrimethoxysilane (PTMS). The results are shown in Table 2.

Comparative Example 1

The polymerization of 1-butene was performed in the same manner as in Example 12 except that the polymerization temperature was changed to 50°C. One hour after the start of polymerization, stirring became difficult to perform, and the polymerization was suspended. Unreacted monomer and solvent were purged, and there was obtained 63.3 g of lumpy poly-1-butene. Granular poly-1-butene was not obtained. This polymer had an II of 98.8%.

Comparative Example 2

The polymerization of 1-butene was performed in the same manner as in Example 12 except that the polymerization temperature was changed to 15°C. Although there was obtained granular poly-1-butene, the productivity of the polymer was very low (Kc = 350). Other results are shown in Table 2.

Example 14

The polymerization of 1-butene was performed in the same manner as in Example 12 except that isobutane as the lower hydrocarbon was replaced by isopentane and the polymerization temperature was changed to 35°C. The results are shown in Table 2.

Example 15

The polymerization of 1-butene was performed in the same manner as in Example 12 except that isobutane was not used and the amount of 1-butene changed to 800 ml. The results are shown in Table 2.

Examples 16 to 18

The polymerization of 1-butene was performed in the same manner as in Example 12 except that PES [C] as the electron donor compound was combined with another electron donor compound [C'] as shown in Table 3. The results are shown in Table 3.

Example 19

Preparation of solid catalyst component

In a 200-ml flask equipped with a dropping funnel and stirrer, with the atmosphere therein replaced with nitrogen, were placed 5 g of $SiO_2$ (as used in Example 1), 20 ml of n-heptane, and 20 ml of BEM solution (as used in Example 1), followed by stirring at 90°C for 1 hour. The supernatant liquid was discarded by decantation and the resulting solids were washed five times with 50 ml of n-hexane at room temperature.

This solid substance was made into the solid catalyst component in the same manner as in Example 1 except that the solution of 2,2,2-tricloroethanol in n-heptane was replaced by a solution containing 13 g of ethanol in 100 ml of n-heptane. Analysis showed that the catalyst component contained 55.5% of $SiO_2$, 3.8% of Mg, 16.4% of Cl, and 3.0% of Ti.

Polymerization of 1-butene

The polymerization of 1-butene was performed in the same manner as in Example 12 except that the catalyst component obtained as mentioned above was used. The results are shown in Table 4.

Example 20

Preparation of solid catalyst component

The solid catalyst component was prepared in the same manner as in Example 19 except that the contacting with di-n-butyl phthalate was omitted. The resulting catalyst component contained 56.1% of $SiO_2$, 4.3% of Mg, 16.1% of Cl, and 3.2% of Ti.

Polymerization of 1-butene

The polymerization of 1-butene was performed in the same manner as in Example 12 except that the catalyst component obtained as mentioned above was used. The results are shown in Table 4.

Example 21

Preparation of solid catalyst component

$SiO_2$, n-heptane, and BEM solution in n-heptane were contacted with one another at 90°C for 1 hour in the same manner as in Example 1. To the resulting contact product was added dropwise from the dropping funnel 10 ml of an n-heptane solution of 20 ml (89 mmol) of ethyl orthosilicate at 0°C over 30 minutes. The reactants were heated to 60°C in 10 minutes and stirred at 60°C for 50 minutes. After the reaction was complete, the resulting solids were washed three times with 50 ml of n-hexane at room temperature.

To the solid component obtained in the step mentioned above were added 20 ml of trichlorosilane ($HSiCl_3$) and 50 ml of n-heptane, followed by reaction at 70°C for 1 hour. The supernatant liquid was discarded and the solids were washed three times with 50 ml of n-hexane at room temperature. The solids were contacted with di-n-butyl phthalate and then with titanium tetrachloride. Thus there was obtained a solid catalyst component containing 56.8% of $SiO_2$, 7.5% of Mg, 20.7% of Cl, and 1.6% of Ti.

Polymerization of 1-butene

The polymerization of 1-butene was performed in the same manner as in Example 12 except that the catalyst component obtained as mentioned above was used. The results are shown in Table 4.

Example 22

Preparation of solid catalyst component

In a 500-ml flask, with the atmosphere therein replaced with nitrogen, were placed 4.76 g of anhydrous magnesium chloride, 25 ml of n-decane, 25 ml of 2-ethylhexanol, and 18 g of $SiO_2$ as used in Example 1, followed by reaction at 130°C for 2 hours. Then, 1.11 g of phthalic anhydride was added. 200 ml of titanium tetrachloride was added dropwise at -20°C over 30 minutes. The temperature of the reactants was slowly raised to 110°C, at which 2.68 ml of diisobutyl phthalate was added, followed by stirring at 110°C for 2 hours. After the completion of reaction, the supernatant liquid was discarded, and the solids were washed twice with 100 ml of toluene at 110°C. 200 ml of titanium tetrachloride was added again, followed by reaction at 110°C for 2 hours. The resulting solid substance was washed eight times with n-hexane at room temperature, followed by drying in vacuo at room temperature for 1 hour. Thus there was

obtained 25.4 g of solid catalyst component containing 54.9% of $SiO_2$, 4.5% of Mg, 13.8% of Cl, and 1.4% of Ti.

Polymerization of 1-butene

The polymerization of 1-butene was performed in the same manner as in Example 12 except that the solid catalyst component obtained as mentioned above was used. The results are shown in Table 4.

Example 23

Preparation of solid catalyst component

In a 200-ml flask, with the atmosphere therein replaced with nitrogen, were placed 608 mg of magnesium dimethoxide, 80 ml of methanol, and 10 g of $SiO_2$ as used in Example 1, followed by stirring at room temperature for 2 hours, and allowed to stand for 2 days. The reaction product was dried in vacuo at 50°C for 3 hours to give white solids. 5 g of the solids, 0.6 ml of ethyl benzoate, and 50 ml of n-heptane were placed in a 200-ml flask, followed by stirring under reflux for 2 hours. The resulting solids were washed five times with 100 ml of n-heptane at room temperature. Then 50 ml of titanium tetrachloride was added, followed by reaction at 80°C for 2 hours. The resulting solids were washed eight times with 100 ml of n-heptane, followed by drying in vacuo at room temperature for 1 hour. Thus there was obtained 13.9 g of solid catalyst component containing 53.3% of $SiO_2$, 4.1% of Mg, 18.8% of Cl, and 3.7% of Ti.

Polymerization of 1-butene

The polymerization of 1-butene was performed in the same manner as in Example 12 except that the solid catalyst component obtained as mentioned above was used. The results are shown in Table 4.

Example 24

Preparation of solid catalyst component

In a 1-liter vibration mill pot were added under the atmosphere of nitrogen 0.21 mol of anhydrous magnesium chloride and 0.21 mol of ethyl benzoate, followed by pulverizing for 20 hours to give a complex. 16.6 g of this complex and 15 g of $SiO_2$ [prepared by calcining G-951, a product of Davison Co., having a specific surface area of 600 $m^2/g$, a pore volume of 1.00 $cm^3/g$, and an average pore radius of 67 A, in a nitrogen stream at 200°C for 2 hours and further at 700°C for 5 hours] were pulverized in this mill pot for 24 hours.

In a 200-ml flask, with the atmosphere therein replaced with nitrogen, were placed 5 g of the pulverized solid obtained as mentioned above and 50 ml of titanium tetrachloride, followed by stirring at 80°C for 2 hours. After the reaction was complete, the resulting solids were washed eight times with 500 ml of n-hexane at room temperature, followed by drying in vacuo at room temperature for 1 hour. Thus there was obtained a solid catalyst component containing 60.5% of $SiO_2$, 6.7% of Mg, 21.3% of Cl, and 0.9% of Ti.

Polymerization of 1-butene

The polymerization of 1-butene was performed in the same manner as in Example 12 except that the solid catalyst component obtained as mentioned above was used. The results are shown in Table 4.

Example 25

Preparation of solid catalyst component

In a 500-ml flask equipped with a dropping funnel and stirrer, with the atmosphere therein replaced with nitrogen, were placed 50 g of $SiO_2$ (as used in Example 1) and 300 ml of 1,2-dichloroethane, followed by stirring at room temperature for 5 hours under a chlorine gas stream. The resulting solids were washed four times with 100 ml of 1,2-dichloroethane.

In a 200-ml flask, with the atmosphere therein replaced with nitrogen, were placed 5 g of the solids obtained as mentioned above, 1 g of anhydrous magnesium chloride, and 20 ml of ethyl acetate. The contents were slowly dried with stirring under reduced pressure,. and the drying in vacuo was continued at 130°C. The remaining liquid was removed, and then 0.4 g of anhydrous aluminum chloride and 100 ml of 1,2-dichloroethane were added, followed by heating under reflux for 2 hours. After the completion of reaction, the solids were washed four times with 100 ml of 1,2-dichloroethane.

Then 0.6 ml of ethyl benzoate and 50 ml of 1,2-dichloroethane were added, followed by heating under reflux for 2 hours. The supernatant liquid was removed and 25 ml of titanium tetrachloride and 75 ml of 1,2-dichloroethane were added, followed by heating under reflux for 2 hours. The resulting solid substance was washed eight times with 100 ml of 1,2-dichloroethane. Thus there was obtained a solid catalyst component containing 67.7% of $SiO_2$, 6.4% of Mg, 23,1% of Cl, and 0.8% of Ti.

Polymerization of 1-butene

The polymerization of 1-butene was performed in the same manner as in Example 12 except that the catalyst component obtained as mentioned above was used. The results are shown in Table 4.

Comparative Example 3

Preparation of solid catalyst component

In a stainless steel (SUS 316) vibration mill pot were placed under the atmosphere of nitrogen 19.0 g of anhydrous magnesium chloride, 3.0 g. of ethyl benzoate, and 2.6 g of 1-hexene, followed by pulverizing with water cooling for 1 hour. Then 3.8 g of titanium tetrachloride was added to the pot, followed by pulverizing with water cooling for 24 hours. Thus there was obtained 24.8 g of solid catalyst component.

Polymerization of 1-butene

The polymerization of 1-butene was performed in the same manner as in Example 12 except that the catalyst component obtained as mentioned above was used. Thirty minutes after the start of polymerization, stirring became difficult to perform, and the polymerization was suspended. Unreacted monomer and solvent were purged, and there was obtained 15.5 g of lumpy poly-1-butene. Granular poly-1-butene was not obtained. This polymer had an II of 95.8%.

Comparative Example 4

Preparation of solid catalyst component

In a 800-ml stainless steel vibration mill pot, 100 mm in inside diameter, containing 2.8 kg of stainless steel balls, 15 mm in diameter, were placed under the atmosphere of nitrogen 20 g of anhydrous magnesium chloride, 5.2 g of ethyl benzoate, and 3.0 ml of methylpolysiloxane (viscosity 100 cs), followed by vibration and pulverizing for 24 hours. 20.3 g of the resulting copulverized product was suspended in 200 ml of titanium chloride, followed by stirring at 80°C for 2 hours. Immediately, the solids were filtered off through a glass filter and washed eight times with 200 ml of purified n-hexane at room temperature, followed by drying in vacuo at room temperature for 1 hour. Thus there was obtained 20.8 g of solid catalyst component containing 2.1% of Ti, 22.5% of Mg, and 66.0% of Cl.

Polymerization of 1-butene

The polymerization of 1-butene was performed in the same manner as in Example 12 except that the catalyst component obtained as mentioned above was used. Ten minutes after the start of polymerization, stirring became difficult to perform, and the polymerization was suspended. Unreacted monomer and solvent were purged, and there was obtained 13.4 g of lumpy poly-1-butene. Granular poly-1-butene was not obtained. This polymer had an II of 88.7%.

Comparative Example 5

Preparation of solid catalyst component

In a four-mouth flask, with the atmosphere therein replaced with nitrogen, were placed 250 ml of titanium tetrachloride and n-heptane in an amount enough to make the concentration of titanium tetrachloride 60%. The flask was placed in a cold bath. Diethyl aluminum diluted to 60% with n-heptane was added dropwise with stirring, while keeping the reaction temperature at -5°C to 0°C. (The amount of diethyl aluminum was equimolar with titanium tetrachloride.) Stirring was continued at -5°C to 0°C for 1 hour. The temperature was raised to 65°C over 1 hour, and stirring was continued at this temperature for 1 hour. The resulting solids were separated and washed four times with n-heptane. Thus there were obtained reddish violet reduced solids.

To the reduced solids were added di-n-butyl ether and an n-heptane solution of hexachloroethane in respective amounts of 1.0 gram-mol and 0.7 gram-mol for 1 gram-atom of titanium in the reduced solids, followed by stirring at 85°C for 5 hours. The resulting solids were washed five times with n-heptane. Thus there was obtained a solid catalyst component.

Polymerization of 1-butene

The polymerization of 1-butene was performed in the same manner as in Example 12 except that the solid catalyst component obtained as mentioned above was used. Immediately after the start of polymerization, stirring became difficult to perform due to sudden heat generation. Ten minutes later, the polymerization was suspended. Unreacted monomer and solvent were purged, and there was obtained 18.5 g of lumpy poly-1-butene. Granular poly-1-butene was not obtained. This polymer had an II as low as 57.6%.

Comparative Example 6

Preparation of solid catalyst component

The procedure of Example 22 was repeated except that $SiO_2$ was not used. There was obtained a solid catalyst component containing 16.8% of Mg, 55.5% of Cl, and 3.2% of Ti.

Polymerization of 1-butene

The polymerization of 1-butene was performed in the same manner as in Example 12 except that the solid catalyst component obtained as mentioned above was used. One hour after the start of polymerization stirring became difficult to perform, and the polymerization was suspended. Unreacted monomer and solvent were purged, and there was obtained 38.1 g of lumpy poly-1-butene. Granular poly-1-butene was not obtained. This polymer had an II of 95.1%.

Table 1

| Example | Organo-metallic compound [B] | Electron donor compound [C] | [B]/[C] (mol/mol) | Hydrogen (ml) | Temper-ature (°C) | Kc (g/g) | II (%) | MFR (g/10 min) | Bulk density (g/cm³) | Ash (ppm) | | | |
|---|---|---|---|---|---|---|---|---|---|---|---|---|---|
| | | | | | | | | | | Ti | Mg | Cl | $SiO_2$ |
| 1 | TIBAL | PES | 20 | 100 | 37 | 2,360 | 99.0 | 0.29 | 0.40 | 10 | 19 | 64 | 239 |
| 2 | TIBAL | PES | 20 | 300 | 37 | 3,450 | 98.7 | 1.54 | 0.36 | 7 | 13 | 44 | 164 |
| 3 | TIBAL | DPMS | 20 | 100 | 37 | 2,520 | 98.8 | 0.47 | 0.37 | 10 | 17 | 60 | 224 |
| 4 | TIBAL | PTMS | 20 | 100 | 37 | 3,080 | 98.4 | 0.41 | 0.37 | 8 | 14 | 49 | 183 |
| 5 | TIBAL | PTMS | 20 | 300 | 37 | 3,060 | 98.6 | 2.61 | 0.36 | 8 | 14 | 49 | 185 |
| 6 | TIBAL | DPES | 10 | 100 | 37 | 2,000 | 99.0 | 0.72 | 0.39 | 12 | 22 | 76 | 283 |
| 7 | TEAL | PES | 20 | 100 | 39.5 | 1,860 | 99.2 | 0.42 | 0.41 | 13 | 24 | 81 | 304 |
| 8 | TEAL | PES | 30 | 100 | 37 | 1,880 | 98.5 | 0.38 | 0.37 | 13 | 23 | 80 | 301 |
| 9 | TEAL | DPMS | 20 | 100 | 39.5 | 2,300 | 98.9 | 3.19 | 0.38 | 10 | 19 | 66 | 246 |
| 10 | TIBAL | PES | 20 | 100 | 30 | 1,490 | 98.6 | 0.46 | 0.37 | 16 | 30 | 101 | 379 |
| 11 | TIBAL | PES | 20 | 100 | 25 | 1,120 | 98.7 | 0.51 | 0.40 | 21 | 39 | 135 | 504 |

TEAL : Triethyl aluminum, DPMS : Diphenyldimethoxysilane,
PTMS : Phenyltrimethoxysilane, DPES : Diphenyldiethoxysilane.

Table 2

| Example | Lower hydro-carbon | Organo-metallic compound | Electron donor compound | Temper-ature (°C) | Kc (g/g) | II (%) | MFR (g/10 min) | Bulk density (g/cm³) | Ash (ppm) | | | |
|---|---|---|---|---|---|---|---|---|---|---|---|---|
| | | | | | | | | | Ti | Mg | Cl | $SiO_2$ |
| 12 | Isobutane | TEAL | PES | 37 | 1,730 | 99.4 | 0.67 | 0.41 | 18 | 25 | 94 | 323 |
| 13 | Isobutane | TEAL | PTMS | 37 | 2,180 | 98.6 | 0.33 | 0.37 | 14 | 20 | 75 | 256 |
| 14 | Isopentane | TEAL | PES | 35 | 1,490 | 98.8 | 0.36 | 0.39 | 21 | 29 | 109 | 375 |
| 15 | (1-Butene) | TEAL | PES | 30 | 1,600 | 99.0 | 0.51 | 0.40 | 19 | 27 | 122 | 349 |
| Comparative Example 1 | Isobutane | TEAL | PES | 50 | - | 98.8 | - | - | - | - | - | - |
| Comparative Example 2 | Isobutane | TEAL | PES | 15 | 350 | 99.0 | 0.21 | 0.40 | 89 | 123 | 466 | 1597 |

Table 3

| Example | Organo-metallic comp.[B] | Electron donor | | [B]/[C] (mol/mol) | [B]/[C'] (mol/mol) | Kc (g/g) | II (%) | MFR (g/10 min) | Bulk density (g/cm³) | Ash (ppm) | | | |
|---|---|---|---|---|---|---|---|---|---|---|---|---|---|
| | | [C] | [C'] | | | | | | | Ti | Mg | Cl | $SiO_2$ |
| 16 | TIBAL | PES | TMPIP | 20 | 40 | 3,030 | 99.2 | 0.29 | 0.40 | 8 | 15 | 50 | 189 |
| 17 | TIBAL | PES | TMHF | 20 | 40 | 2,950 | 99.0 | 0.37 | 0.39 | 8 | 15 | 51 | 192 |
| 18 | TIBAL | PES | EPA | 20 | 40 | 2,720 | 99.0 | 0.56 | 0.39 | 9 | 16 | 56 | 208 |

TMPIP : 2,2,6,6-tetramethylpiperidine,
TMHF : 2,2,5,5-tetramethylhydrofuran,
EPA : Ethyl anisate.

Table 4

| Example | Organo-metallic compound | Electron donor compound | Temperature (°C) | Kc (g/g) | II (%) | MFR (g/10 min) | Bulk density (g/cm³) | Ash (ppm) | | | |
|---|---|---|---|---|---|---|---|---|---|---|---|
| | | | | | | | | Ti | Mg | Cl | $SiO_2$ |
| 19 | TEAL | PES | 37 | 1,950 | 99.3 | 0.27 | 0.43 | 15 | 19 | 66 | 246 |
| 20 | TEAL | PES | 37 | 1,910 | 98.0 | 0.33 | 0.36 | 17 | 23 | 84 | 294 |
| 21 | TEAL | PES | 37 | 3,520 | 98.9 | 0.35 | 0.40 | 5 | 21 | 59 | 161 |
| 22 | TEAL | PES | 37 | 1,730 | 99.0 | 0.42 | 0.39 | 8 | 26 | 80 | 317 |
| 23 | TEAL | PES | 37 | 1,590 | 99.0 | 0.25 | 0.38 | 23 | 26 | 118 | 325 |
| 24 | TEAL | PES | 37 | 1,500 | 98.7 | 0.16 | 0.36 | 6 | 45 | 142 | 403 |
| 25 | TEAL | PES | 37 | 1,560 | 98.6 | 0.21 | 0.38 | 5 | 41 | 148 | 434 |

CLAIMS:

1. A process for producing poly-1-butene which comprises polymerizing 1-butene in the presence of a lower hydrocarbon at a temperature in the range of from 20-40°C in the presence of a polymerization catalyst composed of:

(A) a solid catalyst component comprising as essential constituents a metal oxide, magnesium, halogen, and titanium;

(B) an organic compound of a metal belonging to Groups I to III of the Periodic Table; and

(C) an electron donor compound.

2. A process as in claim 1 wherein the solid catalyst component is obtained by contacting

(1) the reaction product obtained by contacting

(a) a metal oxide or a composite of metal oxides of Group II, III, or IV of the Periodic Table

(b) a dihydrocarbyl magnesium compound, mixtures thereof or a complex thereof with an organic compound of aluminum, boron, beryllium, or zinc, and

(c) a halogen-containing alcohol with,

(2) (d) an electron-donating compound, and

(e) a tetravalent titanium compound.

3. A process as in claim 1 wherein the reaction product (1) includes the (d) electron donating compound and the solid contained therefrom is contacted with (e) the titanium compound.

4. A process as in claim 1 wherein the solid catalyst component is obtained by contacting (1) the reaction product obtained by contacting (a) a metal oxide or a composite of metal oxides of Group II, III, or IV of the Periodic Table, (b) a dialkoxy magnesium compound, and (c) a silicon halide having a hydrogen-silicon bond with (2)(d) an electron donor and (e) a titanium compound.

5. A process as in claim 4 wherein the reaction product (1) includes the (d) electron donor and the solid obtained therefrom is contacted with the (e) titanium compound.